# EUROPÄISCHE PATENTSCHRIFT

(11) **EP 0 999 392 B1**
(45) Veröffentlichungstag und Bekanntmachung des Hinweises auf die Patenterteilung: **28.04.2004**
(21) Anmeldenummer: 99121438.8
(22) Anmeldetag: 28.10.1999
(51) Int. Cl.: F16K 31/40, F16K 47/02

(54) **Eigenmediumbetätigtes Servoventil für Flüssigkeiten, insbesondere Magnetventil für sanitäre Armaturen**
Medium actuated servo valve for fluids, especially magnetic valve for sanitary armatures
Servo-soupape actionnée par son propre fluide, en particulier une soupape magnétique pour des armatures sanitaires

(30) Priorität: 05.11.1998 DE 29819769 U
(43) Veröffentlichungstag der Anmeldung: 10.05.2000
(73) Patentinhaber: A. und K. Müller GmbH & Co. KG, 40595 Düsseldorf (DE)
(72) Erfinder: Glaus, Uwe, 40593 Düsseldorf (DE); Moldenhauer, Hermann, 40625 Düsseldorf (DE); Schön, Hartmut, 51061 Köln (DE)
(74) Vertreter: Feder, Wolf-Dietrich, Dr. Dipl.-Phys.

(56) Entgegenhaltungen:
- DE-U- 29 802 369
- US-A- 3 593 956
- US-A- 4 844 112
- US-A- 5 363 873

## Beschreibung

Die Erfindung betrifft ein eigenmediumbetätigtes Servoventil für Flüssigkeiten, insbesondere ein Magnetventil für sanitäre Armaturen mit den Merkmalen aus dem Oberbegriff des Patentanspruchs 1. Derartige Ventile sind bekannt und beispielsweise in den deutschen Gebrauchsmustern DE-GM 29 614 645, DE-GM 29 800 536 und DE-GM 29 802 369 beschrieben.

In sanitären Einrichtungen werden vermehrt elektronisch betätigte Armaturen verwendet, wobei der Wasserfluß über einen Sensor mit elektronischer Steuerung durch ein Magnetventil freigegeben bzw. gesperrt wird.

Hierbei kommt es immer wieder zu vibrationsartigen Geräuschen in der Schließphase des Ventils, die von den Benutzern der Armatur als störend empfunden werden. Insbesondere treten diese Geräuschprobleme oft dann auf, wenn in Fließrichtung gesehen, der Armaturenauslauf oberhalb des Magnetventils angeordnet ist. Eine solche Anordnung ist bei Waschtisch- und Düschanlagen gegeben.

Diese in der Schließphase auftretenden Geräusche beruhen auf folgenden Ursachen:

Betrachtet man die Wasserwege derartiger Installationen, so stellt man fest, daß die aufsteigende Leitung hinter dem Ventil relativ klein dimensioniert ist, so daß hier hohe Fließgeschwindigkeiten auftreten. Schließt das Magnetventil, so entsteht hinter dem Ventilsitz ein Unterdruck durch Abriß der beschleunigten Strömung. Dabei entstehen Kavitationsblasen, die bei ihrem Zusammenfallen kurze Druckspitzen erzeugen, die das gerade geschlossene Ventil invers wieder öffnen. Der darauf wieder einsetzende Wasserfluß und der erneute Schließvorgang rufen wiederum Kavitation hervor, allerdings mit abnehmender Tendenz. Bis zum endgültigen Schließen des Ventils wird so ein vibrierendes Geräusch erzeugt, daß durch Körperschallübertragung auf die vorgeschaltete Installation ausstrahlt.

Die als Rattern wahrnehmbaren Geräusche werden von den Betreibern der Anlagen nicht toleriert, so daß Reklamationen gegenüber den Armaturenlieferanten die Folge sind.

Der vorliegenden Erfindung liegt die Aufgabe zugrunde, an einem eigenmediumbetätigten Servoventil für Flüssigkeiten, insbesondere einem Magnetventil für sanitäre Armaturen, die beim Schließen des Ventils entstehenden Geräusche zu eliminieren.

Die Lösung dieser Aufgabe erfolgt erfindungsgemäß mit den Merkmalen aus dem Patentanspruch 1. Vorteilhafte Weiterbildungen der Erfindung sind in den abhängigen Ansprüchen beschrieben.

Der Grundgedanke der Erfindung besteht darin, die Ausbildung der kurzen Druckschwankungen in der Schließphase des Ventils auszugleichen und damit die Kavitation und die daraus entstehenden Vibrationen zu verhindern, und zwar direkt an der Stelle, wo sie entstehen. Hierzu wird vorzugsweise unmittelbar hinter dem Ventilsitz und besonders vorzugsweise direkt mit dem Ventilteller verbunden der erfindungsgemäße Dämpfungskörper angeordnet, der aus einem kompressiblen geschlossenzelligen Schaumstoff mit elastomeren Eigenschaften besteht. Diese Eigenschaften sollten in einem Temperaturbereich von +3° bis 90°C stabil sein. Weiterhin sollte der Schaumstoff eine hohe Reißfestigkeit besitzen und einen niedrigen "Compression-Set" aufweisen, d.h. bei Druckbeaufschlagung sollen keine bleibenden Verformungen auftreten. Weiterhin sollte der Schaumstoff für den.Einsatz in Trinkwasser unbedenklich und resistent gegen zugelassene Wasserdesinfektionsstoffe, wie z.B. Chlor, sein. Es kann hier in vorteilhafter Weise beispielsweise ein Silikongummi-Schaumstoff verwendet werden.

In der Unterdrucksituation bläht sich das Volumen des geschlossenzelligen Schaumstoffes auf, während der Dämpfungskörper bei Überdruck komprimiert wird. Diese Volumenänderungen verhindern die Entstehung der Kavitationsblasen und damit auch die Geräuschbildung.

Im folgenden wird anhand der beigefügten Zeichnungen ein Ausführungsbeispiel für ein erfindungsgemäßes Servoventil mit Geräuschdämpfungsvorrichtung näher erläutert.

In den Zeichnungen zeigen:

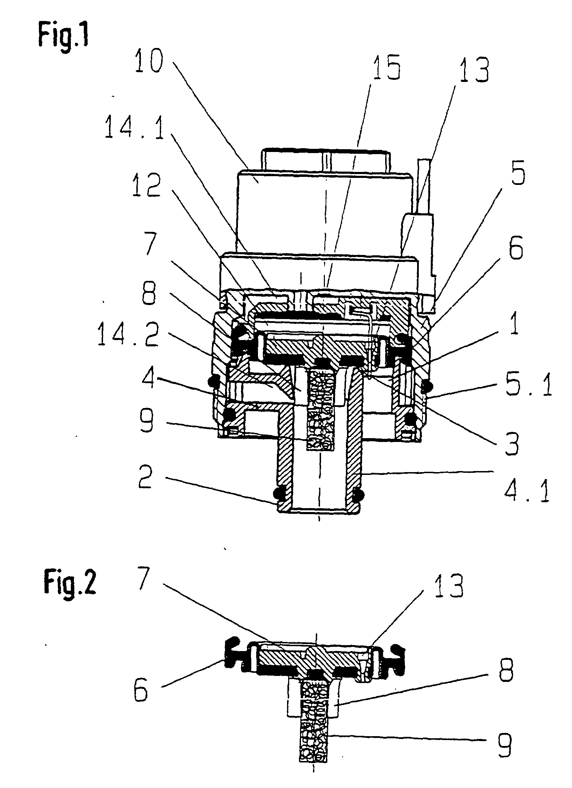

Fig. 1 ein Magnetventil in Kartuschenbauform für elektronisch betätigbare Armaturen im Teil-Längsschnitt;
Fig. 2 im Vollschnitt den Ventilteller des Ventils gemäß Fig. 1 mit daran angeordnetem Dämpfungskörper.

In den Zeichnungen ist ein servogesteuertes Magnetventil dargestellt, dessen Grundaufbau dem Aufbau der in DE-GM 29 614 645 und DE-GM 29 800 536 beschriebenen Magnetventile entspricht.

Das Magnetventil besitzt ein im wesentlichen topfförmig ausgebildetes Gehäuseunterteil 5, in das von der offenen Seite her ein Innenteil 4 eingesetzt ist, welches koaxial zur Ventilachse angeordnete Eingangsdurchlässe 1 als Ventileingang aufweist und einen Auslaufstutzen 4.1 für den zentral vorgesehenen Ventilausgang 2 trägt. Ventileingang 1 und Ventilausgang 2 sind demnach koaxial zueinander und zur Gehäuseachse derart angeordnet, daß die Einund Ausströmrichtungen entgegengesetzt zueinander ausgerichtet sind. Das Gehäuseunterteil 5 besitzt im Bereich seines unteren Randes einen Befestigungsgewindeabschnitt 5.1 zum Befestigen des Magnetventils in einer nicht dargestellten Sanitärarmatur.

Im Gehäuseunterteil 5 ist am inneren Ende des Innenteils 4 ein.Ventilsitz 3 angeordnet, auf den sich ein Ventilteller in Form einer Rollmembran 6, in welche der Ventilteller 7 eingesetzt ist, auflegen kann. Der Ventilteller 7 trägt an seiner Unterseite einen den Ventilsitz 3 durchgreifenden Führungszapfen 8, der sternförmig ausgebildet ist und eine axiale Aufnahmebohrung aufweist.

Auf das Gehäuseunterteil 5 ist ein kappenartiges Gehäuseoberteil 10 aufgesetzt, in welchem sich in nicht dargestellter Weise der das Ventil ansteuernde Elektromagnet befindet. Im Elektromagnet ist in an sich bekannter und beispielsweise in den oben zitierten Druckschriften genauer beschriebener Weise ein Plunger geführt, der an seinem unteren Ende eine Dichtung trägt, mittels der eine Vorsteuerdüse 15 an der Oberseite des Gehäuseunterteils 5 geöffnet oder verschlossen werden kann. Der Raum zwischen dem Plunger und der Vorsteuerdüse 15 ist mit einer hinter der Rollmembran 6 angeordneten Gegendruckkammer 12 verbunden, die ihrerseits über einen seitlich im Ventilteller 7 angeordneten Kanal 13 mit dem Ventil-eingang 1 verbunden ist. Andererseits ist der Raum zwischen der Vorsteuerdüse 15 und dem Plunger bei geöffneter Vorsteuerdüse über Durchbrüche 14.1 und 14.2 mit dem Ventilausgang 2 verbunden.

In die Aufnahmebohrung des Führungszapfens 8 ist ein zylindrisch ausgebildeter Dämpfungskörper 9 aus einem kompressiblen geschlossenzelligen Schaumstoff mit elastomeren Eigenschaften, beispielsweise aus Silikongummi-Schaumstoff mit einem Raumgewicht von 0,4-0,8 g/cm³ derart eingeklebt, daß er in axialer Rich-tung in den Auslaufstutzen 4.1 hineinragt. Dabei ist es zweckmäßig, wenn der Durchmesser des Dämpfungs-körpers 9 etwa dem halben Durchmesser des Ventil-sitzes 3 entspricht, während die axiale Länge des Dämpfungskörpers 9 mindestens dem 1,6-fachen Durch-messer des Ventilsitzes 3 entsprechen sollte.

Die Funktionsweise des beschriebenen Magnetventils entspricht im wesentlichen der Funktionsweise der in den obigen Zitaten beschriebenen Magnetventile. Wenn der Elektromagnet des Ventils mit Spannung beaufschlagt wird, wird der Plunger des Elektromagnetenangezogen und durch die Hubbewegung des Plungers die Vorsteuerdüse 15 geöffnet. Im geschlossenen Zustand der Vorsteuerdüse herrscht in der Gegendruckkammer 12, die über den Kanal 13 mit dem Ventileingang 1 verbunden ist, ein Druck, der die Membran 6 mit dem Ventilteller 7 auf dem Ventilsitz 3 festhält. Beim Öffnen der Vorsteuerdüse 15 wird über die Durchbrüche 14.1 und 14.2 die Gegendruckkammer 12 mit dem Ventilausgang 2 verbunden, was zu einem Druckabfall in der Gegendruckkammer 12 führt. Nunmehr hebt der auf die Unterseite der Membran 6 vom Ventileingang 1 her wirkende Wasserdruck die Membran 6 vom Ventilsitz 3 ab. Damit fließt Wasser vom Ventileingang 1 zum Ventilausgang 2 und von dort zu dem nicht dargestellten Armaturenauslauf. Da der Armaturenauslauf einen Strömungswiderstand besitzt, kommt es zu einem Druckaufbau im Auslaufstutzen 4.1, so daß der Dämpfungskörper 9 komprimiert wird.

Wird über den Elektromagnet nun der Schließvorgang des Ventils eingeleitet, so setzt die Membran 6 zurück auf.den Ventilsitz 3. Im Auslaufstutzen 4.1 fällt der Druck auf Null und darunter, d.h. es bildet sich für kurze Zeit ein Unterdruck. Dies ist die Folge des vorauseilenden Wasserstroms, der abreißt, sich aber für eine kurze Zeit weiter in Richtung.Armaturenauslauf bewegt.

Der Dämpfungskörper 9 dehnt sich entsprechend diesem Druckabfall aus und verhindert so die Bildung der geräuschverursachenden Kavitationsblasen. Kurze Zeit später ist der dynamische Strömungsvorgang beendet, so daß der Dämpfungskörper 9 seine Ursprungsform wieder annimmt.

Es hat sich gezeigt, daß mit einer derartigen Anordnung eines Dämpfungskörpers in der Schließphase des Ventils Vibrationsgeräusche zuverlässig verändert werden können.

## Patentansprüche

1. Eigenmediumbetätigtes Servoventil für Flüssigkeiten, insbesondere Magnetventil für sanitäre Armaturen mit einem Ventilgehäuse (5,10), in dem ein Ventilteller (7) bewegbar angeordnet ist, sowie einem Ventilausgang (2) und einem Ventileingang (1), die im Schließzustand des Ventils durch den auf einem Ventilsitz (3) aufsitzenden Ventilteller voneinander getrennt sind, **gekennzeichnet durch**, eine Geräuschdämpfungsvorrichtung, die als im Fließweg des Mediums zwischen Ventilsitz (3) und Ventilausgang (2) angeordneter Dämpfungskörper (9) ausgebildet ist, der aus einem kompressiblen, geschlossenzelligen Schaumstoff, insbesondere Schaumkunststoff, mit elastomeren Eigenschaften besteht.

2. Servoventil nach Anspruch 1, **dadurch gekennzeichnet, daß** der Dämpfungskörper (9), in Strömungsrichtung gesehen, unmittelbar hinter dem Ventilsitz (3) angeordnet ist.

3. Servoventil nach Anspruch 2, **dadurch gekennzeichnet, daß** der Ventilteller (7) einen den Ventilsitz (3) durchgreifenden Führungszapfen (8) trägt und der zylindrisch ausgebildete Dämpfungskörper (9) in axialer Richtung am oder im Führungszapfen (8) angeordnet ist.

4. Servoventil nach Anspruch 3, **dadurch gekennzeichnet, daß** der Dämpfungskörper (9) in einer Aufnahmebohrung des Führungszapfens (8) befestigt ist.

5. Servoventil nach Anspruch 3 oder 4, **dadurch gekennzeichnet, daß** der Durchmesser des Dämpfungskörpers (9) etwa dem halben Durchmesser des Ventilsitzes (3) entspricht.

6. Servoventil nach einem der Ansprüche 1 bis 5, **dadurch gekennzeichnet, daß** die axiale Länge des Dämpfungskörpers (9) mindestens dem 1,6-fachen des Durchmessers des Ventilsitzes (3) entspricht.

7. Servoventil nach einem der Ansprüche 1 bis 6, **dadurch gekennzeichnet, daß** der Dämpfungskörper (9) aus einem Schaumstoff mit einem Raumgewicht von 0,4 bis 0,8 g/cm³ besteht.

8. Servoventil nach einem der Ansprüche 1 bis 7, **dadurch gekennzeichnet, daß** der Dämpfungskörper (9) aus einem Silikongummi-Schaumstoff besteht.

## Claims

1. Servo valve for liquids which is actuated by its own medium, in particular a magnetic valve for sanitary fittings, having a valve housing (5, 10) in which a valve disc (7) is movably arranged, as well as a valve exit (2) and a valve entry (1) which, when the valve is in the closing condition, are separated from one another by the valve disc resting on a valve seat (3), **characterised by** a noise-damping device which is constructed as a damping member (9) which is arranged in the flow path of the medium between the valve seat (3) and the valve outlet (2) and consists of a compressible, closed-cell foamed material, in particular foamed plastic, with elastomeric properties.

2. Servo valve according to claim 1, **characterised in that** the damping member (9) is arranged immediately behind the valve seat (3), viewed in the direction of flow.

3. Servo valve according to claim 2, **characterised in that** the valve disc (7) carries a guide peg (8) that passes through the valve seat (3), and the damping member (9), which is of cylindrical construction, is arranged on or in said guide peg (8) in the axial direction.

4. Servo valve according to claim 3, **characterised in that** the damping member (9) is fastened in a receiving bore in the guide peg (8).

5. Servo valve according to claim 3 or 4, **characterised in that** the diameter of the damping member (9) approximately corresponds to half the diameter of the valve seat (3).

6. Servo valve according to one of claims 1 to 5, **characterised in that** the axial length of the damping member (9) corresponds to at least 1.6 times the diameter of the valve seat (3).

7. Servo valve according to one of claims 1 to 6, **characterised in that** the damping member (9) consists of a foamed material with a density of 0.4 to 0.8 g/cm³.

8. Servo valve according to one of claims 1 to 7, **characterised in that** the damping member (9) consists of a silicone rubber foamed material.

## Revendications

1. Servo-soupape ou servo-vanne pour liquides, actionnée par son propre fluide, notamment électrovanne ou vanne ou soupape électromagnétique pour robinetteries sanitaires, comprenant un corps de soupape (5, 10) dans lequel est disposé de manière mobile, un disque d'obturation de soupape (7), ainsi qu'une sortie de soupape (2) et une entrée de soupape (1), qui, dans l'état de fermeture de la soupape, sont séparées ou isolées l'une de l'autre par le disque d'obturation de soupape appuyé sur un siège de soupape (3),
**caractérisée par** un dispositif d'amortissement ou d'atténuation de bruit, conçu en tant que corps d'amortissement (9) qui est disposé dans le parcours d'écoulement du fluide, entre le siège de soupape (3) et la sortie de soupape (2), et qui est réalisé en une mousse compressible à cellules fermées, notamment une mousse de matière plastique, présentant des propriétés élastomères.

2. Servo-soupape selon la revendication 1, **caractérisée en ce que** le corps d'amortissement (9), vu dans la direction de l'écoulement, est disposé directement derrière le siège de soupape (3).

3. Servo-soupape selon la revendication 2, **caractérisée en ce que** le disque d'obturation de soupape (7) porte un tenon de guidage (8) s'engageant à travers le siège de soupape (3), et le corps d'amortissement (9) de configuration cylindrique est disposé dans la direction axiale, sur ou dans le tenon de guidage (8).

4. Servo-soupape selon la revendication 3, **caractérisée en ce que** le corps d'amortissement (9) est fixé dans un alésage de logement du tenon de guidage (8).

5. Servo-soupape selon la revendication 3 ou 4, **caractérisée en ce que** le diamètre du corps d'amortissement (9) correspond environ à la moitié du diamètre du siège de soupape (3).

6. Servo-soupape selon l'une des revendications 1 à 5, **caractérisée en ce que** la longueur axiale du corps d'amortissement (9) correspond au moins à 1,6 fois le diamètre du siège de soupape (3).

7. Servo-soupape selon l'une des revendications 1 à 6, **caractérisée en ce que** le corps d'amortissement (9) est constitué d'une mousse d'un poids spécifique de 0,4 à 0,8 g/cm³.

8. Servo-soupape selon l'une des revendications 1 à 7, **caractérisée en ce que** le corps d'amortissement (9) est réalisé en une mousse de caoutchouc silicone.
